# EUROPEAN PATENT SPECIFICATION

(11) **EP 4 149 724 B1**
(45) Date of publication and mention of the grant of the patent: **27.03.2024**
(21) Application number: 21725498.6
(22) Date of filing: 11.05.2021
(51) Int. Cl.: B25J 9/00, A61H 1/02

(54) **MOVING DEVICE FOR MOVING A HUMAN THUMB, HAND-EXOSKELETON AND METHOD OF GRASPING**
BEWEGUNGSVORRICHTUNG ZUM BEWEGEN EINES MENSCHLICHEN DAUMENS, HANDSCHUH UND VERFAHREN ZUM GREIFEN
DISPOSITIF DE MOUVEMENT POUR DÉPLACER UN POUCE HUMAIN, EXOSQUELETTE DE MAIN ET PROCÉDÉ DE PRÉHENSION

(30) Priority: 15.05.2020 EP 20174943
(43) Date of publication of application: 22.03.2023
(73) Proprietor: ETH Zurich, 8092 Zürich (CH)
(72) Inventor: BÜTZER, Tobias Lukas, 6300 Zug (CH); AUPÉE, Antoine Nicolas, 1005 Lausanne (CH); GASSERT, Roger, 8092 Zürich (CH); LAMBERCY, Olivier, 8044 Zürich (CH); HOFMANN, Urs Alexander Tassilo, 8004 Zürich (CH)
(74) Representative: Schulz Junghans Patentanwälte PartGmbB
(86) International application number: PCT/EP2021/062551
(87) International publication number: WO 2021/228900

(56) References cited:
- WO-A1-2019/092559
- CN-A- 106 943 277
- US-B2- 10 028 880

## Description

The invention concerns a moving device for moving a human thumb, a hand-exoskeleton for moving at least one finger of a human hand comprising a moving device according to the invention and a method of grasping an object.

Grasping is one of the most important functions of a human hand for interacting with the world. The most important part of the hand to realize grasping is the thumb, which is the digit with the most complex ability to move. For grasping in typical daily activities, it is essential that the thumb is rotatable and flexible such that it can be moved into opposition to preferably at least one other finger

Due to a natural limitation of mobility or as a result of an accident or due to work-related fatigue or damage to the functionality of the hand, it may be necessary to support the grasping process with an appropriate device.

It is desirable that such a device allows thumb flexion as well as thumb opposition and that it is comfortable for a person to wear, lightweight, easy to use and inexpensive to produce.

There are several mechanisms and devices known from research that are adapted to support the flexion movement of a human finger and therefore also for a thumb.

For example, US 10 028 880 B2 shows a hand exoskeleton with a three-layered sliding spring mechanism with a single driving mechanism to transmit power to the joints of a human finger to support the flexion motion of the finger. The hand exoskeleton shown here is able to at least support the bending of the three joints of the finger.

Mechanisms to move a thumb in an opposition position are only partially integrated in finger moving devices. Typically, the thumb is fixed to a certain position, wherein a thumb fixation leads to a decrease of the grasping movements that are realizable.

Some solutions known from the literature are designed to imitate the complex movements of individual fingers with a large number of joints and levers. However, such solutions are typically not optimal in terms of wearing comfort because of their heavy weight and large construction volume.

The problem to be solved by the present invention is to provide a moving device, a hand-exoskeleton and a method of grasping that support the natural grasping of a human hand in an easy way.

The problem is solved by a moving device according to claim 1, a hand-exoskeleton according to claim 14 and a method of grasping according to claim15. Advantageous embodiments of the moving device are given in subclaims 2 to 13.

In the following the carpometacarpal joint is abbreviated by the expression CPC joint, the metacarpophalangeal joint is abbreviated by the expression MCP joint and the interphalangeal joint is abbreviated by the expression IP joint.

In the following the expression distal means directed away from the center of the body of a person and the expression proximal means directed to the center of the body of a person. The expression dorsal refers to the back of a human body part, in the context of the invention typically the back of the human hand.

The resting position of the thumb is the anatomical position in which the thumb is in an essentially unflexed position, adducted to the index finger.

The grasping position of the thumb is the anatomical position in which the thumb is in opposition to at least one other finger of the hand, such that an object can be fixed between the thumb and the part of the hand it is in an opposition to it.

The opposition position of the thumb is the anatomical position in which the thumb is in an opposition to at least one other finger of the hand. There are three types of opposition known:
Pad opposition usually occurs between palmar surfaces of the fingers and the thumb, near to or on the pads. The thumb is for example in a pad opposition when holding a small object between the palmar side of index finger and the thumb.

Side opposition means a position like for example when holding or using a typical door key.

The flexed position of the thumb is the anatomical position in which the angle between at least two bones or parts of the thumb is reduced. In other words, a thumb in a flexed position is bent

The extended position of the thumb is the anatomical position in which, unlike in the flexed position, all bones or parts of the thumb are arranged in one straight line. In other words, a thumb in the extended position is stretched.

A first aspect of the invention is a moving device for moving a human thumb, in particular for moving the thumb between a resting position and a grasping position, comprising a thumb bending means adapted to at least partially move the thumb between a flexed position and an extended position. The thumb bending means comprises a gear unit for transforming a rotation of a rotation element, which is rotatably mounted to a housing, into an essentially linear movement between a translation element and the housing.

The thumb bending means further comprises a first flexion spring element mechanically connected to the translation element and adapted to be fixed with a first proximal end of the first flexion spring element relative to a human thumb at a position in a proximal distance to the metacarpophalangeal joint, in particular at a position between the metacarpophalangeal joint and the carpometacarpal joint.

The thumb bending means further comprises a second flexion spring element mechanically connected to the housing and adapted to be fixed with a second distal end of the second flexion spring element to the human thumb at a position in a distal distance to the metacarpophalangeal joint, in particular at the distal phalanx and/ or the proximal phalanx of the thumb.

By operating the gear unit, a relative translational movement between the translation element and the housing is realized that causes a bending of at least one of the flexion spring elements and as a result at least a partially bending of the thumb.

The gear unit comprises a rotation element, a translation element and a housing. The rotation element is fixed in or to the housing such that the rotation element is rotatably movable relative to the housing but essentially at least the translational degree of freedom in the direction of the linear movement, in particular the entirety of all translational degrees of freedom, between the rotation element relative and the housing is fixed.

The rotation axis of the rotation element is in a fixed position with respect to the housing such that the translation element is movable relative to the housing in a linear movement.

The rotation axis of the rotation element may be arranged perpendicularly to the direction of the linear movement and a plane extending essentially in parallel to the surface of the thumb to which the moving device is fixed.

The thumb bending means comprises a first flexion spring element with a first distal end and a first proximal end. The first flexion spring element is mechanically connected to the translation element, typically by its first distal end. The first proximal end of the first flexion spring element is adapted to be fixed relative to the thumb. This does not necessarily mean that the first flexion spring element it directly fixed to the surface of the thumb. It is included by the invention that only the position of the first proximal end of the first flexion spring element is fixed relative to the surface of the thumb, wherein the position of the first proximal end is in a proximal distance to the MCP joint of the thumb to which the moving device is fixed. In particular, the position of the first proximal end is a position between the MCP joint and the CPC joint. In a special embodiment the position of the first proximal end of the first flexion spring element is close to the CPC joint, in particular the position is essentially above the CPC joint. Therefore, the thumb bending device may comprise an adjustment means to adjust the length of the first flexion spring element between its first distal end and its first proximal end such that the first proximal end is fixable to the desired position. The fixation of the first proximal end of the first flexion spring element relative to the thumb is adapted to be essentially unchangeable by using the moving device for moving a thumb in the way intended by the invention.

The first flexion spring element comprises at least one spring, in particular at least one leaf spring, extending between its first distal end and its first proximal end and which is deformable, in particular bendable. The first flexion spring element is adapted to at least partially buckle by moving its first distal end closer to its first proximal end, wherein the buckling in particular occurs away from the surface of the thumb to which the moving device is fixed. Due to the buckling, as a reaction force is directed from the first flexion spring element to the thumb, bending of the thumb results.

In one embodiment of the thumb bending means the mechanical connection between the first flexion spring element and the translation element is typically fixed with respect to all translational degrees of freedom and all rotational degrees of freedom. It is not excluded by the invention, that the first flexion spring element is pivotably fixed to the translational element such that only the rotational degree of freedom around a rotation axis perpendicular to the direction of the linear movement and perpendicular to a plane in which the axis of the linear movement runs and which is essentially parallel to the surface of the thumb to be moved is free.

The thumb bending means comprises a second flexion spring element with a second distal end and a second proximal end. The second flexion spring element is mechanically connected to the housing, typically by its second proximal end. The second flexion spring element is adapted to be fixed with its second distal end to the human thumb. The position of the fixation of the second distal end is in a distal distance to the MCP joint. In particular, the position of the fixation of the second distal end is at the distal phalanx and/ or the proximal phalanx of the thumb. At least the second distal end of the second flexion spring element is fixed to at least one of the thumb's phalanxes, wherein at least a fixation to the distal phalanx is preferred.

The second flexion spring element comprises at least one spring, in particular at least one leaf spring, extending between its second distal end and its second proximal end and which is deformable, in particular bendable. The second flexion spring element is adapted to at least partially buckle by moving its second distal end closer to its second proximal end, wherein the buckling in particular occurs away from the surface of the thumb to which the moving device is fixed.

In one special embodiment the thumb bending means of the moving device extends, when fixed to a human thumb, between the second distal end of the second flexion spring element fixed to a position at the proximal phalanx of the thumb and the first proximal end of the first flexion spring element fixed to a position at the CPC joint.

The gear unit is arranged between the first flexion spring element and the second flexion spring element, in particular the gear unit is arranged between the MCP joint and the CMC joint of the human thumb.

The gear unit is adapted to transform a rotation movement of a rotation element into an essentially linear movement between a translation element and the housing. This means in other words, that the translation element and/or the housing are movable translationally relative to each other.

In particular two linear movements are possible. By a first linear movement the translational element is movable relative to the housing, wherein the housing is in a relatively fixed position with respect to the thumb to which the moving device is fixed. In other words, essentially only the translational element is moved. By the second linear movement the housing is movable relative to the translational element, wherein the translation element is in a relatively fixed position with respect to the thumb to which the moving device is fixed. In other words, essentially only the housing is moved.

By the first linear movement the first flexion spring element is at least partially bent or buckled, whereby a restoring force of the first flexion spring element increases while the first distal end of the first flexion spring element is moved closer to the first proximal end of the first flexion spring element. In other words, the force driving the translation element is working against an increasing restoring force of the first flexion spring element.

By the second linear movement the second flexion spring element is at least partially bent or buckled, whereby a restoring force of the second flexion spring element increases while the second proximal end of the second flexion spring element is moved closer to the second distal end of the second flexion spring element. In other words, the force driving the housing is working against an increasing restoring force of the second flexion spring element.

In one embodiment of the invention it is intended that an initial restoring force, which is the restoring force in an unbent state, of the first flexion spring element is lower than an initial restoring force of the second flexion spring element such that the first flexion spring element is bent essentially before the second flexion spring element is bent which causes that the thumb fixed to the moving device is first bent at the CPC joint and essentially afterwards is bent at the MCP and/or IP joint.

In other words, it is intended by this embodiment of the invention that the first linear movement and the second linear movement occur essentially one after another.

It should not be excluded by the invention that the first linear movement and the second linear movement occur at least partially at the same time, essentially while there is transition between the first and second movement.

The rotation element is driven by a driving unit such as an electric motor to which it is typically mechanically connected.

By operating the gear unit, a relative translational movement between the translation element and the housing is realized that causes a bending of at least one of the flexion spring elements and as a result at least a partial bending of the thumb occurs.

Caused by the fixation to the thumb the bending or buckling of the thumb bending means results in a force or moment working on the thumb fixed to the moving device that results in an at least partial flexion of the thumb from an extended position to a flexed position.

By operating the gear unit in the opposite direction, the thumb is movable from an extended position to a flexed position.

In one embodiment of the moving device according to the invention the first flexion spring element and the second flexion spring element are essentially arranged along the direction of the linear movement. The second flexion spring element is mechanically connected to the housing in the direction of the linear movement on the opposite side of the mechanical connection of the first flexion spring element to the translation element, such that the first flexion spring element and/or the second flexion spring element are bendable by the relative translational movement and a flexion force and/or a flexion moment is applicable to the thumb fixed to the moving device.

In another embodiment of the moving device according to the invention the rotation element is a pinion and the translation element is a rack, wherein the pinion and the rack are adapted to intermesh such that the rotation of the pinion is transformable into the linear movement between the rack and the housing.

In another embodiment of the moving device according to the invention the mechanical connection between the second flexion spring element and the thumb is realizable by a second fixation means, that is fixable to a phalanx of the thumb, in particular to the distal phalanx of the thumb, wherein at least a translational degree of freedom of the second distal end along the direction of the linear movement is fixable by the second fixation means.

In particular all translational degrees of freedom of the second distal end are fixable by the second fixation means. Furthermore, the rotational degrees of freedom of the second distal end are fixable by the second fixation means.

Due to this fixation an increase of the distance of the second fixation means and the housing leads to a bending or buckling of the second flexion spring element and therefore to a force or torque acting onto the second fixation means and therefore onto the thumb fixed to the moving device.

In another embodiment of the moving device according to the invention the second flexion spring element comprises two springs, in particular two leaf springs, arranged essentially in parallel to each other, such that the moment of inertia of the second flexion spring element around an axis perpendicular to the linear movement and perpendicular to the plane in which the two springs are parallelly arranged is increased.

The two springs of the second flexion spring element are arranged in parallel to each other. In particular, both springs extend in the direction of the linear movement.

Furthermore, both springs of the second flexion spring element are arranged in parallel and essentially in a plane in which the axis of the linear movement runs and which is essentially parallel to the surface of the thumb to be moved by the moving device when the moving device is fixed to the thumb.

In a special embodiment both springs of the second flexion spring element are arranged such that they enclose, in a vertical sectional plane perpendicular to the plane in which the axis of the linear movement runs and which is essentially parallel to the surface of the thumb, an angle between 10° and 60°, wherein in another special embodiment the angle may be adjustable according to the length of the thumb to be moved, in particular to be flexed.

The first flexion spring element comprises at least one spring.

The two springs of the second flexion spring element and the at least one spring of the first flexion spring element are in a special embodiment leaf springs essentially made of, in particular stainless, steel with a tensile strength of at least 1500 MPa, in particular of at least 1900 MPa.

It is possible to vary the spring rate of the second flexion spring element and/or the first flexion spring element by a combination of several individual leaves that are arranged in parallel and or in series.

In another embodiment of the moving device according to the invention the fixation of the first flexion spring element to the thumb is realizable by a first fixation means, wherein the first flexion spring element is fixable by the first fixation means such that at least a translational degree of freedom of the first proximal end along the direction of the linear movement is fixed by the first fixation means.

In particular all translational degrees of freedom of the first proximal end are fixable by the first fixation means.

In a special embodiment the first fixation means is adapted to connect the first flexion spring element indirectly to the thumb, which means that the first flexion spring element is not fixed in direct mechanical contact to the surface of the thumb. In one embodiment the first fixation means may be adapted to fix the first proximal end of the first flexion spring element in a distance to the surface of the thumb. The first fixation means may therefore be adapted to realize a mechanical fixation to an interface that is fixable to a human hand, in particular to a dorsal side of the hand on the opposite side of the hand's palm and therefore is adapted for fixing the first proximal end of the first flexion spring element indirectly to the thumb.

In another embodiment of the moving device according to the invention the thumb bending means comprises a guiding element arranged between the fixation of the second flexion spring element to the thumb and the housing, wherein the guiding element is adapted to be fixed to the thumb such that the guiding element is adapted to guide the second flexible spring element by essentially fixing all translational degrees of freedom and all rotational degrees of freedom of the second flexible spring element except a translational degree of freedom in the direction of the linear movement.

The guiding element is adapted to guide the second flexion spring element, in particular when the second flexion spring element is moved according to the relative translational movement, in a defined vertical distance to the thumb to which the moving device is fixed.

In a special embodiment the second distal end of the second flexion spring element is fixable to the distal phalanx and the guiding element is fixable to the proximal phalanx.

The guiding element is adapted to guide the second flexible spring element by essentially fixing all translational degrees of freedom and all rotational degrees of freedom of the second flexible spring element except a translational degree of freedom in the direction of the linear movement. In other words, the guiding element essentially only allows and provides a movement of the second flexion spring element driven by the gear unit along the direction of the linear movement, which means along the length extension of the thumb, when the moving device is fixed to the thumb.

The second flexible spring element and the guiding element are connected in a way that enables the second flexible spring element to slide along the guiding element. This means that a relative movement between the second flexible spring element and the guiding element fixed to the thumb is realizable.

In a special embodiment the guiding element comprises at least one guiding hole or guiding rail through or along which the second flexible spring element is extending. In the case of an embodiment with a second flexible spring element comprising several parallel springs each spring extends through a single guiding hole or along a single guiding rail such that the springs are not in physical contact when extending along or through the guiding element and are therefore not interfering.

The fixation of the guiding element as well as of the second fixation means to the thumb may be realized by at least one strap each and/or by an adhesive substance.

In another embodiment of the moving device according to the invention the second flexion spring element comprises a first section and a second section arranged along the axis of the relative translational movement on opposite sides of the guiding element, wherein between the guiding element and the second flexion spring element a frictional resistance is realized such that the friction force acts against a force acting on the second flexion spring element when the second flexion spring element is moved in a relative translational movement, which leads to a deformation of the first section of the second flexion spring element between the housing and the guiding element essentially before a deformation of the second section of the second flexion spring element between the guide element and the fixation of the second flexion spring element to the thumb occurs.

In other words, the second flexion spring element comprises a first section, which is a section essentially between the housing and the guiding element, and a second section, which is a section essentially between the guiding element and the second fixation means.

Between the guiding element and the second flexion spring element a frictional resistance is realized which means that a sliding of the second flexion spring element along the guiding element is blocked by a friction force working between a surface of the guiding element and a surface of the second flexion spring element that are in physical contact. The friction force is therefore blocking the relative translational movement by which the second proximal end of the second flexion spring element is moved in distal direction.

As a consequence of the blocking by the friction force the relative movement of the second flexion spring element to cause a bending or buckling of the second flexion spring element is dividable in two parts.

By the first part of the relative movement of the second flexion spring element the second proximal end is moved towards the second distal end, wherein, caused by the frictional resistance, essentially only the distance between the second proximal end and the guiding element is reduced, such that essentially only the first section of the second flexion spring element is bent or buckled, and wherein, while the bending occurs, a restoring force of the first section increases with the reduction of the distance between the second proximal end and the guiding element. At a certain point a restoring force of the bent first section overcomes the friction force such that the sliding of the second flexion spring element along the guiding element is no longer blocked and by a second part of the relative movement of the second flexion spring element the second proximal end is movable towards the second distal end, wherein the distance between the guiding element and the distal end of the second flexion spring element is reduced such that alternatively and/or additionally the second section of the second flexion spring element is bendable. Therefore, by the first part of the relative movement of the second flexion spring element the thumb is essentially flexed by a rotation around the MCP joint and by the second part of the relative movement of the second flexion spring element the thumb is essentially flexed by a rotation around the IP joint, which corresponds to the natural flexion movement of a thumb.

The first part of the relative movement and the second part of the relative movement do not necessarily occur strictly one after another.

In another embodiment of the moving device according to the invention the thumb bending means comprises at least one spring element arranged in parallel to the first flexion spring element and the second flexion spring element, wherein a distal end of the spring element is fixed to the second distal end of the second flexion spring element and a proximal end of the spring element is fixed to the first proximal end of the first flexion spring element and wherein the spring element is supported on the housing.

In a special embodiment the spring element is arranged on the thumb-facing side of the first and/or the second flexion spring elements, such that the spring element is located between the surface of the thumb and the first flexion spring element and the second flexion spring element, when the moving device according to this embodiment is fixed to a human thumb.

The spring element comprises at least one spring, in particular a bendable leaf spring.

In one embodiment the spring element comprises a third flexion spring element arranged in parallel to the first flexion spring element, wherein the third flexion spring element is supported in the direction of the linear movement on the housing and wherein a proximal end of the third flexion spring element is fixed to the proximal end of the first flexion spring element and/or the spring element comprises a fourth flexion spring element arranged in parallel to the second flexion spring element, wherein the fourth flexion spring element is supported in the direction of the linear movement on the housing and wherein a distal end of the fourth flexion spring element is fixed to the distal end of the second flexion spring element.

In particular the third flexion spring element and the fourth flexion spring element are fixed to the housing or to an outer housing that is mechanically connected to the housing.

In another special embodiment the outer housing is connected to the housing such that the housing is movable relative to the outer housing, in particular such that the movement of the housing is guided by the outer housing.

While the extended length between the first proximal end of the first flexion spring element and the second distal end of the second flexion spring element is changeable, in particular such that it is enlargeable by the relative translational movement, the extended length between the proximal end and the distal end of the spring element is fix or unchangeable by the relative translational movement. By the fixation of the proximal end of the spring element to the first proximal end of the first flexion spring element and the fixation of the distal end of the spring element to the second distal end of the second flexion spring element, the spring element is bent or buckled when the first flexion spring element and/or the second flexion spring element are bent or buckled, such that a flexion force and/or a flexion moment of the spring element is additionally acting on the thumb fixed to the moving device.

The third flexion spring element is typically arranged in a distance to the first spring element in a vertical distance of at least 1mm and at most 8mm, in particular in a vertical distance of at least 2mm and at most 6mm.

The fourth flexion spring element is typically arranged in a distance to the second spring element in a vertical distance of at least 1mm and at most 8mm, in particular in a vertical distance of at least 2mm and at most 6mm.

In another embodiment of the moving device according to the invention the moving device comprises a thumb opposition means, adapted to move the thumb between a resting position and an opposition position, in particular a pad opposition position and/or side opposition, wherein the thumb opposition means is pivotably connected to the thumb bending means by a pivot and wherein the thumb opposition means comprises a feeding element which is mechanically connected to the thumb bending means in a distance to the pivot such that, when a feeding force with at least one force direction component perpendicular to the direction of the linear movement is applied to the thumb bending means by the feeding element, the thumb bending means rotates around the pivot and therefore a thumb fixed to the thumb bending means is movable at least in an abducted position.

In particular the thumb opposition means is adapted to move the thumb between a resting position, in which the thumb is typically adducted to the index finger, and pad opposition, a side opposition position. At least it is adapted to move the thumb between a resting position and pad opposition position, wherein the natural thumb movement of the thumb that is the supported by the moving device is generated by an at least partial simultaneous movement of the thumb into an abducted position and an internal rotation of the thumb around the CMC joint.

The thumb opposition means is pivotably connected to the thumb bending means by a pivot such that the thumb bending means is rotatable. The pivot is for example realized by a ball joint, wherein in a special embodiment a rotational degree of freedom around an axis perpendicular to the direction of the linear movement and in parallel to a plane in which the axis of the linear movement runs and which is essentially parallel to the surface of the thumb to be moved is fixed. In other words, the thumb bending means is rotatable around an axis in the direction of the linear movement and is rotatable around an axis perpendicular to the direction of the linear movement and perpendicular to a plane in which the axis of the linear movement runs and which is essentially parallel to the surface of the thumb to be moved.

In one embodiment the pivot is arranged at the position of the mechanical connection of the first proximal end of the first flexion spring element to the thumb. In particular, the pivot is arranged at the position at the CMC joint.

The thumb opposition means comprises a feeding element which is mechanically connected to the thumb bending means. Between the pivot and the position of the connection of the feeding element to the thumb bending means is a distance, in particular a distal distance with respect to the pivot. In particular, the feeding element is fixed to the housing and/or the outer housing. Alternatively or additionally, it is also possible that the feeding element is fixed to the guiding element and/or the second fixation means.

A feeding force caused by moving the feeding element in the direction of the thumb bending means is applicable to the thumb bending means such that the thumb bending means, and therefore a thumb fixed to the thumb moving device, is rotatable around a rotation axis of the pivot.

The rotation movement of the thumb bending means can be divided in two rotation movement parts. By the first rotation movement part the thumb fixed to the thumb moving device is movable from a resting position at least to a abducted position which corresponds essentially to a rotation of the thumb bending means around the axis perpendicular to the direction of the linear movement and perpendicular to a plane in which the axis of the linear movement runs and which is essentially parallel to the surface of the thumb to be moved.

By the second rotation movement part the thumb is moved into an opposition position, in particular a pad opposition position, which corresponds essentially to a rotation of the thumb bending means around the axis perpendicular to the direction of the linear movement.

Typically, but not necessarily, the first rotation movement part takes place before the second rotation movement part when applying the feeding force to the thumb bending means.

The advantage of this embodiment is that the whole thumb bending means, including the gear unit, is rotatable by the thumb opposition means which supports a compact mechanical design and a high wearing comfort.

In another embodiment of the moving device according to the invention the mechanical connection between the feeding element and the thumb bending means is realized by a pivot joint, wherein an angle of a rotary movement of the feeding element in relation to the thumb bending means is limited by a mechanical stop means.

The pivot joint is arranged and adapted to rotate the feeding element around an axis perpendicular to the direction of the linear movement and perpendicular to a plane in which the axis of the linear movement runs and which is essentially parallel to the surface of the thumb.

The angle of the rotation around the pivot joint is limited by a mechanical stop means to a angle, in particular an arbitrary angle, between 5° and 50 ° by a first stop element and a second stop element of the mechanical stop means, which enclose the said angle. In a special embodiment the angle is adjustable with respect to the individual thumb to be fixed to the moving device.

The mechanical stop means is adapted to prevent the rotary movement of the feeding element around the rotation axis of the pivot joint at a certain abduction angle of the thumb fixed to the moving device.

While the rotation movement of the thumb bending means around the pivot changes from the first rotation movement to the second rotation movement, the feeding element is rotated around the pivot joint from a first angular position, corresponding to a first stop element of the mechanical stop means, to a second angular position, corresponding to a second stop element of the mechanical stop means.

In another embodiment of the moving device according to the invention the feeding element is a flexible spring, in particular a bending spring.

The spring is adapted to be bent or buckled when the feeding force is applied to the thumb bending means. In particular the spring is adapted to bend or buckle when the second rotation movement part of the thumb bending means occurs, such that a rotation around the axis of the linear movement is realizable.

The flexion spring is in one embodiment made of, in particular stainless, steel with a tensile strength of at least 1500 MPa, in particular of at least 1900 MPa.

In another embodiment of the moving device according to the invention the feeding element is movably guided by a feeding element guiding means when moved to apply a feeding force onto the thumb bending means.

The feeding element guiding means is adapted to guide the feeding element to move in an essentially translational way.

The feeding element guiding means may be arranged on or is part of an interface that is fixable to a human hand, in particular to a dorsal side of the hand on the opposite side of the hand's palm.

The feeding element is adapted to be movable manually or by an actuator. In a special embodiment the thumb opposition means comprises a handling device to move the feeding element for applying the feeding force by hand. In another embodiment the thumb moving device comprises a driving means to move the feeding device.

A second aspect of the invention is a hand-exoskeleton for moving at least one finger of a human hand comprising a moving device for moving a human thumb according to the invention.

The hand-exoskeleton may comprise a driving unit adapted to at least operate the gear unit by driving the rotation element and/ or to drive the movement of the feeding element.

Another aspect of the invention is a method of grasping an object, wherein a moving device according to the invention is fixed to the thumb of a human hand or a hand-exoskeleton according to the invention is fixed to a human hand and wherein an object is placed between the thumb and the palm of the hand and wherein by operating the gear unit the thumb is at least partially moved in the direction of the palm, in particular by at least partially bending, such that forces act onto the object on essentially opposite sides.

Due to these normal forces acting on the object, the object is held essentially by the friction forces resulting from the normal forces.

The invention is explained below using the embodiment examples shown in the enclosed drawings.

It is shown in
- Fig. 1:: one embodiment of the moving device according to the invention,
- Fig. 2:: how a moving device according to the invention is fixed to the thumb of a human hand,
- Fig. 3:: the function of the thumb opposition means, wherein
- Fig. 3a:: shows a first state of the thumb opposition means,
- Fig. 3b:: shows a second state of the thumb opposition means,
- Fig. 3c:: shows a third state of the thumb opposition means,
- Fig. 4:: a first detail of an embodiment of the moving device according to the invention,
- Fig. 5:: a second detail of an embodiment of the moving device according to the invention,
- Fig. 6:: an embodiment of a hand-exoskeleton according to the invention, and in
- Fig. 7:: another embodiment of the moving device according to the invention.

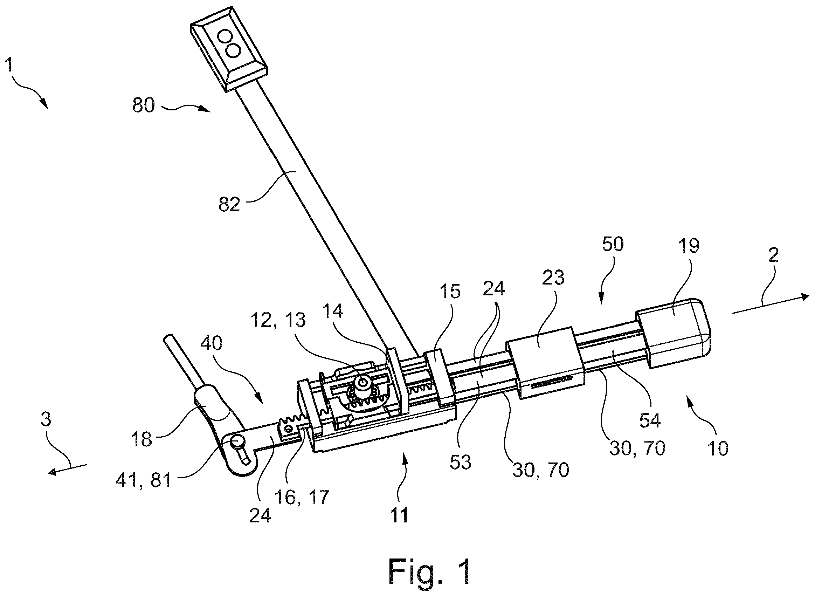

Figure 1 shows one embodiment of the moving device 1 according to the invention. The moving device 1 comprises a thumb bending means 10 adapted to move a thumb that is fixed to the thumb bending means 10 between an extended position and a flexed position.

In the distal direction 2 the thumb bending means 10 comprises a second fixation means 19 that is in the given example adapted to be fixed to a distal phalanx of a thumb. The second fixation means 19 is fixed to a second flexion spring element 50 comprising in the given example two parallel leaf springs 24 and extending from the second fixation means 19 in proximal direction 3 to the housing 14 of a gear unit 11 to which it is fixed.

The second flexion spring element 50 is divided in two sections 53, 54. The first section 53 is located between the housing 14 and the guiding element 23. The second section 54 is located between the guiding element 23 and the second fixation means 19. The guiding element 23 is adapted to guide the second flexion spring element 50 when the second flexion spring element 50 is moved by the gear unit 11 in distal direction 2. The second flexion spring element 50 is mechanically connected to the gear unit 11 that is adapted to move the second flexion spring element 50 as well as the first flexion spring element 40.

The gear unit 11 comprises a rotation element 12, which is in the given example a pinion 13, and a translation element 16, which is in the given example a rack 17. The rack 17 and the pinion 13 are arranged and adapted to intermesh. Furthermore, the gear unit 11 comprises a housing 14 to which the pinion 13 is rotatably fixed.

The rack 17 is fixed to the first distal end of the first flexion spring element 40 comprising one leaf spring 24. The first proximal end 41 of the first flexion spring element 40 is fixed to the first fixation means 18, wherein the first fixation means 18 is adapted to fix the first proximal end 41 of the first flexion spring element 40 in a position fixed relative to the thumb. The position of the first proximal end 41 of the first flexion spring element 40 is essentially the position of the carpometacarpal joint of a thumb.

By operating the pinion 13 of the gear unit 11 the rack 17 is movable in proximal direction 3 which causes a bending or buckling of the first flexion spring element 40. While the bending of the first flexion spring element 40 occurs the restoring force of the first flexion spring element 40 increases such that at a certain point the housing 14 moves in distal direction 2 which causes a bending or buckling of the second flexion spring element 50, wherein, caused by a frictional resistance between the second flexion spring element 50 and the guiding element 23, the first section 53 of the second flexion spring element 50 is bent first and afterwards the second section 54 of the second flexion spring element 50 is bent.

As shown in Figure 1 below the second flexion spring element 50 a spring element 30 with a fourth flexion spring element 70 is arranged. The fourth flexion spring element 70 is via the second fixation means 19 fixed to the second flexion spring element 50. The proximal end of the fourth flexion spring element 70 is fixed to an outer housing 15, which is additionally adapted to guide the housing 14 when it is moved in distal direction 2.

Furthermore, the moving device 1 shown in Figure 1 comprises a thumb opposition means 80 with a feeding element 82 that is pivotably fixed to the outer housing 15. The thumb opposition means 80 is rotatably connected to the thumb bending means 10 by a pivot 81, which is in one example a ball joint. By moving the feeding element 82 in the direction of the outer housing 15 a feeding force is applicable to the thumb bending means 10 such that the thumb bending means 10 is rotatable around at least one rotation axis of the pivot 81.

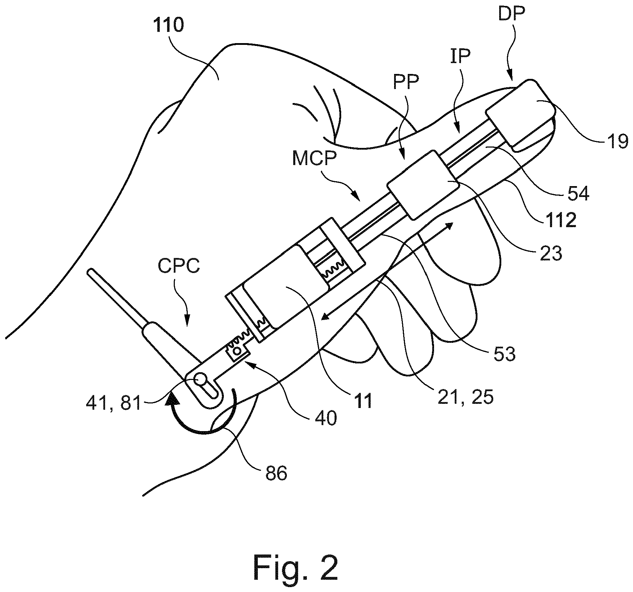

Figure 2 shows how a moving device 1 is fixed to the thumb 112 of a human hand 110. It is shown that the second fixation means 19 is fixed to the distal phalanx DP, that the second section 54 of the second flexion spring element is arranged above the interphalangeal joint IP, that the guiding element 23 is fixed to the proximal phalanx PP, that the first section 53 of the second flexion spring element is arranged above the metacarpophalangeal joint MPC, that the gear unit 11 is arranged between the metacarpophalangeal joint MPC and the interphalangeal joint IP and that the first proximal end 41 of the first flexion spring element 40 as well as the pivot 81 of the thumb opposition means is arranged above the carpometacarpal joint CPC. The feeding element that causes by a feeding force the rotation movement 86 around at least one rotation axis of the pivot 81 is not shown here. An arrow indicates the second relative translational movement 25 of the relative translational movement 21 that causes the bending of the second flexion spring element.

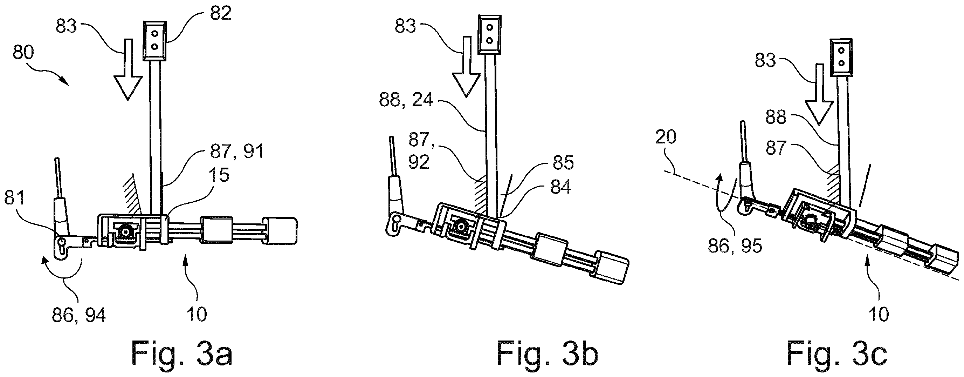

Figure 3 shows the function of the thumb opposition means 80 in three steps. Figure 3a shows a first state of the thumb opposition means 80 in the resting position, in which a thumb to which the moving device is fixed is unflexed and adducted to the index finger. Figure 3b shows a second state of the thumb opposition means 80 when the thumb to which the moving device is fixed is already in a position in which the thumb is an abducted position, in particular in a side opposition position. Figure 3c shows a third state of the thumb opposition means 80 in which the thumb is in pad opposition position.

When the feeding element 82 is moved in the direction of the thumb bending means 10 a feeding force 83 is applied to the outer housing 15 to which the feeding element 82 is connected via a pivot joint 85. The feeding element 82 is guided by a mechanical stop means 87. In the first state shown in Figure 3a the feeding element 82 is in contact with a first stop element 91. The feeding force 83 of the feeding element 82 in combination with the pivot 81 causes that the thumb opposition means 80 is adapted to cause a rotation movement 86 of the thumb bending means 10. The comparison of Figure 3a and Figure 3b shows that a first rotation movement 94 around a rotation axis of the pivot 81 perpendicular to the plane of the figure is limited by the angle 85 enclosed by the first stop element 91 and the second stop element 92 of the mechanical stop means 87.

By further applying the feeding force 83 to the thumb bending means 10 as it is shown in Figure 3c, a second rotation movement 95 around the axis of the linear movement 20 is caused. To allow this second rotation movement 95 the feeding element 82 is designed as a flexion spring 88, in particular as a leaf spring 24.

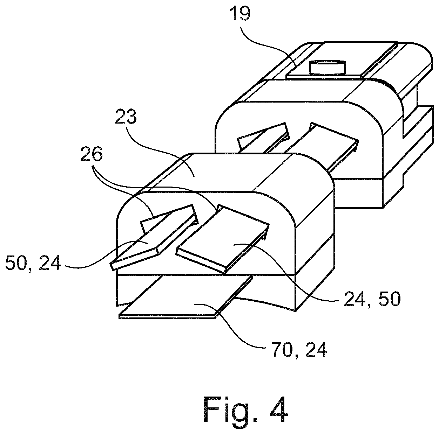

Figure 4 shows a first detail of an embodiment of the moving device 1. It can be seen that the second flexion spring element 50 comprises two parallel springs, designed as leaf springs 24, which enclose an angle. The two leaf springs 24 are guided by the guiding element 23. The guiding element 23 therefore comprises two guiding holes 26, wherein each leaf spring 24 runs through a single guiding hole 26. In other words, the leaf springs 24 are movable relative to the guiding element 23 by sliding through the guiding holes 26. In the rear part of Figure 4 the second fixation means 19 is shown.

Below the second flexion spring element 50 a fourth flexion spring element 70 is arranged, which comprises one leaf spring 24 in the given example. The leaf spring 24 of the fourth flexion spring element 70 is guided by the guiding element 23 as well, which is not shown here in detail.

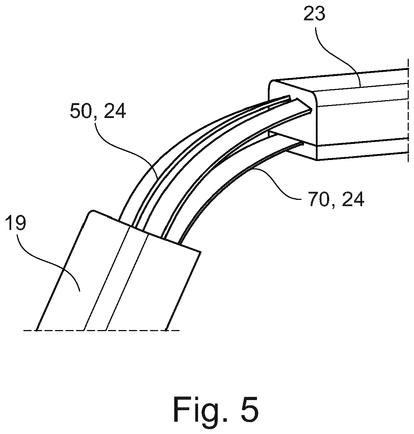

Figure 5 shows a second detail of an embodiment of the moving device illustrating the bending of the second flexion spring element 50 and the fourth flexion spring element 70 according to the relative translational movement. Caused by the movement of the second flexion spring element 50 in the direction of the second fixation means 19 the leaf spring 24 or leaf springs 24 of the second flexion spring element 50 are bent. Because of the fixation of the fourth flexion spring element 70 to the second fixation means 19 the leaf spring 24 of the fourth flexion spring element 70 is bent as well. By the bending a flexion force and/or a flexion moment is applicable to a thumb that is fixed to the moving device.

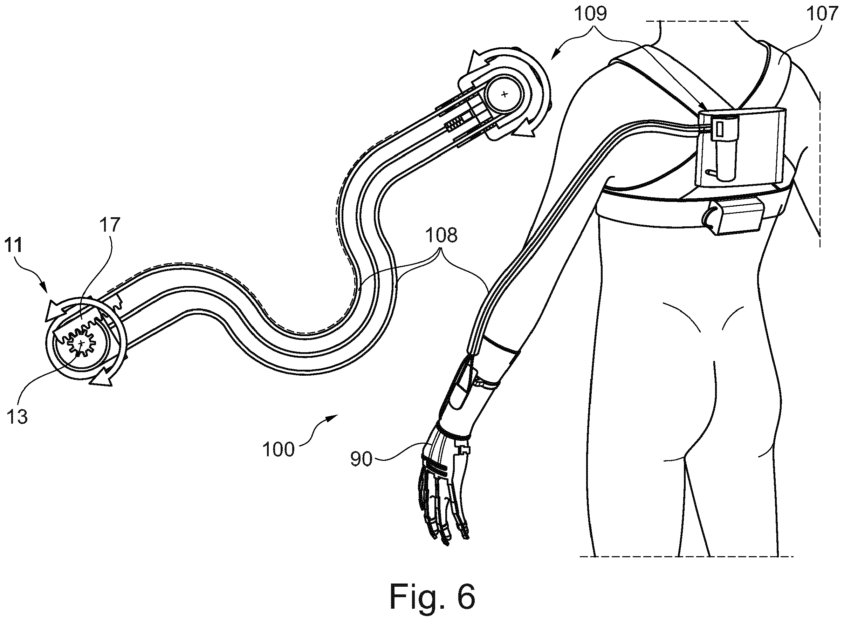

Figure 6 shows an embodiment of a hand-exoskeleton 100. The hand exoskeleton 100 comprises a driving unit 109 that is fixable to a human body by a harness 107. The driving unit is via an interface 90 which is adapted to be fixed to the dorsal side of the hand connected by a bowden cable 108 with the gear unit 11 of the moving device such that by the bowden cable 108 the pinion 13 can be rotated so that the rotation of the pinion 13 can be transferred into a linear movement between the rack 17 and the housing.

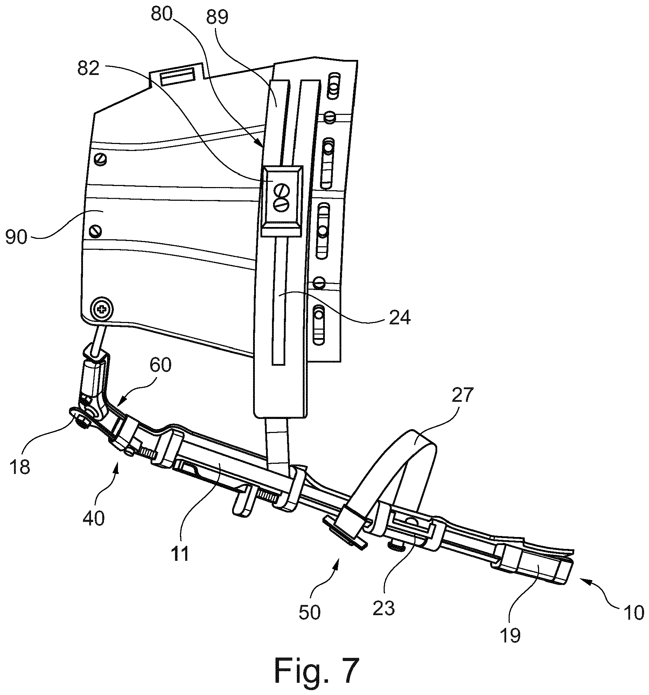

Figure 7 shows another embodiment of the moving device 1 according to the invention. In particular Figure 7 shows an interface 90 that is adapted to be fixed to the dorsal side of a hand. On the upper side of the interface 90 the feeding element guiding means 89 is shown that guides the feeding element 82 when moved in the direction of the thumb bending means 10. The feeding element 82 comprises a leaf spring 24. The feeding element 82 is mechanically connected to the gear unit 11, wherein the pivot joint, which realizes this rotatable connection, as well as the mechanical stop means are not shown here. The gear unit 11 is arranged between the first flexion spring element 40 and the second flexion spring element 50. The first flexion spring element 40 extends between the first fixation means 18 and the gear unit 11. The second flexion spring element 50 extends between the second fixation means 19 and the gear unit 11. Figure 7 also shows a third flexion spring element 60. Furthermore, it is shown that the guiding element 23 is adapted to be fixed to the thumb by a strap 27.

### List of reference signs

| | |
|---|---|
| moving device | 1 |
| distal direction | 2 |
| proximal direction | 3 |
| thumb bending means | 10 |
| gear unit | 11 |
| rotation element | 12 |
| pinion | 13 |
| housing | 14 |
| outer housing | 15 |
| translation element | 16 |
| rack | 17 |
| first fixation means | 18 |
| second fixation means | 19 |
| axis of linear movement | 20 |
| relative translational movement | 21 |
| guiding element | 23 |
| leaf spring | 24 |
| second relative translational movement | 25 |
| guiding hole | 26 |
| strap | 27 |
| spring element | 30 |
| first flexion spring element | 40 |
| first proximal end | 41 |
| second flexion spring element | 50 |
| first section | 53 |
| second section | 54 |
| third flexion spring element | 60 |
| fourth flexion spring element | 70 |
| thumb opposition means | 80 |
| pivot | 81 |
| feeding element | 82 |
| feeding force | 83 |
| pivot joint | 84 |
| angle | 85 |
| rotation movement | 86 |
| mechanical stop means | 87 |
| flexion spring | 88 |
| feeding element guiding means | 89 |
| interface | 90 |
| first stop element | 91 |
| second stop element | 92 |
| first rotation movement | 94 |
| second rotation movement | 95 |
| hand-exoskeleton | 100 |
| harness | 107 |
| bowden cable | 108 |
| driving unit | 109 |
| hand | 110 |
| thumb | 112 |
| carpometacarpal joint | CPC |
| metacarpophalangeal joint | MCP |
| interphalangeal joint | IP |
| distal phalanx | DP |
| proximal phalanx | PP |

## Claims

1. Moving device (1) for moving a human thumb (112), in particular for moving the thumb (112) between a resting position and a grasping position, comprising a thumb bending means (10) adapted to at least partially move the thumb (112) between a flexed position and an extended position , wherein the thumb bending means (10) comprises a gear unit (11) for transforming a rotation of a rotation element (12), which is rotatably mounted to a housing (14), into an essentially linear movement between a translation element (16) and the housing (14) and wherein the thumb bending means (10) comprises a first flexion spring element (40) mechanically connected to the translation element (16) and adapted to be fixed with a first proximal end (41) of the first flexion spring element (40) relative to a human thumb (112) at a position in a proximal distance to the metacarpophalangeal joint (MCP), in particular at a position between the metacarpophalangeal joint (MCP) and the carpometacarpal joint (CPC), and wherein the thumb bending means (10) comprises a second flexion spring element (50) mechanically connected to the housing (14) and adapted to be fixed with a second distal end of the second flexion spring element (50) to the human thumb (112) at a position in a distal distance to the metacarpophalangeal joint (MCP), in particular at the distal phalanx (DP) and/ or the proximal phalanx (PP) of the thumb (112), such that by operating the gear unit (11) a relative translational movement (21) between the translation element (16) and the housing (14) is realized that causes a bending of at least one of the flexion spring elements (40,50) and as a result at least a partial bending of the thumb (112).

2. Moving device (1) according to claim 1, **characterized in that** the first flexion spring element (40) and the second flexion spring element (50) are essentially arranged along the direction of the linear movement and that the second flexion spring element (50) is mechanically connected to the housing (14) in the direction of the linear movement in the opposite side of the mechanical connection of the first flexion spring element (40) to the translation element (16), such that the first flexion spring element (40) and/or the second flexion spring element (50) are bendable by the relative translational movement (21) and a flexion force and/or a flexion moment is applicable to the thumb (112) fixed to the moving device (1).

3. Moving device (1) according to claim 1-2, **characterized in that** the rotation element (12) is a pinion (13) and the translation element (16) is a rack (17), wherein the pinion (13) and the rack (17) are adapted to intermesh such that the rotation of the pinion (13) is transformable into the linear movement between the rack (17) and the housing (14).

4. Moving device (1) according to claim 1-3, **characterized in that** the mechanical connection between the second flexion spring element (50) and the thumb (112) is realizable by a second fixation means (19), that is fixable to a phalanx (PP, DP) of the thumb (112), in particular to the distal phalanx (DP) of the thumb (112), wherein at least a translational degree of freedom of the second distal end along the direction of the linear movement is fixable by the second fixation means (19).

5. Moving device (1) according to claim 1-4, **characterized in that** the second flexion spring element (50) comprises two springs, in particular two leaf springs (24), arranged essentially in parallel to each other, such that the moment of inertia of the second flexion spring element (50) around an axis perpendicular to the linear movement and perpendicular to the plane in which the two springs are parallelly arranged is increased.

6. Moving device (1) according to claim 1-5, **characterized in that** the fixation of the first flexion spring element (40) to the thumb (112) is realizable by a first fixation means (18), wherein the first flexion spring element (40) is fixable by the first fixation means (18) such that at least a translational degree of freedom of the first proximal end (41) along the direction of the linear movement is fixed by the first fixation means (18).

7. Moving device (1) according to claim 1-6, **characterized in that** the thumb bending means (10) comprises a guiding element (23) arranged between the fixation of the second flexion spring element (50) to the thumb (112) and the housing (14), wherein the guiding element (23) is adapted to be fixed to the thumb (112) such that the guiding element (23) is adapted to guide the second flexible spring element (50) by essentially fixing all translational degrees of freedom and all rotational degrees of freedom of the second flexible spring element (50) except a translational degree of freedom in the direction of the linear movement.

8. Moving device (1) according to claim 7, **characterized in that** the second flexion spring element (50) comprises a first section (53) and a second section (54) arranged along the axis of the relative translational movement (21) on opposite sides of the guiding element (23), wherein between the guiding element (23) and the second flexion spring element (50) a frictional resistance is realized such that the friction force acts against a force acting on the second flexion spring element (50) when the second flexion spring element (50) is moved in a relative translational movement (21), which leads to a deformation of the first section (53) of the second flexion spring element (50) between the housing (14) and the guiding element (23) essentially before a deformation of the second section (54) of the second flexion spring element (50) between the guide (23) element and the fixation of the second flexion spring element (50) to the thumb (112) occurs.

9. Moving device (1) according to claim 1-8, **characterized in that** the thumb bending means (10) comprises at least one spring element (30) arranged in parallel to the first flexion spring element (40) and the second flexion spring element (50), wherein a distal end of the spring element (30) is fixed to the second distal end of the second flexion spring element (50) and a proximal end of the spring element (30) is fixed to the first proximal end (41) of the first flexion spring element (40) and wherein the spring element (30) is supported on the housing (14).

10. Moving device (1) according to claim 1-9, **characterized in that** the moving device (1) comprises a thumb opposition means (80), adapted to move the thumb (112) between a resting position and an opposition position, in particular a pad opposition position and/or side opposition position, wherein the thumb opposition means (80) is pivotably connected to the thumb bending means (10) by a pivot (81) and
wherein the thumb opposition means (80) comprises a feeding element (82) which is mechanically connected to the thumb bending means (10) in a distance to the pivot (81) such that,
when a feeding force (83) with at least one force direction component perpendicular to the direction of the linear movement is applied to the thumb bending means (10) by the feeding element (82),
the thumb bending means (10) rotates around the pivot (81) and therefore a thumb (112) fixed to the thumb bending means (10) is movable at least in an abducted position.

11. Moving device (1) according to claim 10, **characterized in that** the mechanical connection between the feeding element (82) and the thumb bending means (10) is realized by a pivot joint (84), wherein an angle (85) of a rotary movement of the feeding element (82) in relation to the thumb bending means (10) is limited by a mechanical stop means (87).

12. Moving device (1) according to claim 10-11, **characterized in that** the feeding element (82) is a flexible spring (88), in particular a bending spring.

13. Moving device (1) according to claim 10-12, **characterized in that** the feeding element (82) is movably guided by a feeding element guiding means (89) when moved to apply a feeding force (83) onto the thumb bending means (10).

14. Hand-exoskeleton (100) for moving at least one finger of a human hand (110) comprising a moving device (1) for moving a human thumb (112) according to one of the claims 1-13.

15. Method of grasping an object, wherein a moving device (1) according to one of the claims 1-13 is fixed to the thumb (112) of a human hand (110) or a hand-exoskeleton (100) according to claim 14 is fixed to a human hand (110) and wherein an object is placed between the thumb (112) and the palm of the hand (110) and wherein by operating the gear unit (11) the thumb (112) is at least partially moved in the direction of the palm, in particular by at least partial bending, such that forces act onto the object on essentially opposite sides.

## Patentansprüche

1. Bewegungsvorrichtung (1) zum Bewegen eines menschlichen Daumens (112), insbesondere zum Bewegen des Daumens (112) zwischen einer Ruheposition und einer Greifposition, umfassend ein Daumen-Biegemittel (10), das angepasst ist, den Daumen (112) zumindest teilweise zwischen einer gebogenen Position und einer gestreckten Position zu bewegen, wobei das Daumen-Biegemittel (10) eine Getriebeeinheit (11) zur Umwandlung einer Rotation eines Rotationselements (12), das rotierbar an einem Gehäuse (14) angebracht ist, in eine im Wesentlichen lineare Bewegung zwischen einem Translationselement (16) und dem Gehäuse (14) umfasst und wobei das Daumen-Biegemittel (10) ein erstes Biegefederelement (40) umfasst, das mechanisch mit dem Translationselement (16) verbunden ist und angepasst ist, mit einem ersten proximalen Ende (41) des ersten Biegefederelements (40) relativ zu einem menschlichen Daumen (112) an einer Position in einem proximalen Abstand zu dem Metacarpophalangealgelenk (MCP) fixiert zu werden, insbesondere an einer Stelle zwischen dem Metacarpophalangealgelenk (MCP) und dem Carpometacarpalgelenk (CPC), und wobei das Daumen-Biegemittel (10) ein zweites Biegefederelement (50) umfasst, das mechanisch mit dem Gehäuse (14) verbunden ist und angepasst ist, mit einem zweiten distalen Ende des zweiten Biegefederelements (50) an dem menschlichen Daumen (112) an einer Position in einem distalen Abstand zu dem Metacarpophalangealgelenk (MCP) fixiert zu werden, insbesondere an die distale Phalanx (DP) und/ oder die proximale Phalanx (PP) des Daumens (112), so dass durch die Betätigung der Getriebeeinheit (11) eine relative Translationsbewegung (21) zwischen dem Translationselement (16) und dem Gehäuse (14) realisiert wird, die eine Biegung zumindest eines der Biegefederelemente (40, 50) und infolgedessen zumindest eine teilweise Biegung des Daumens (112) bewirkt.

2. Bewegungsvorrichtung (1) gemäß Anspruch 1, **dadurch gekennzeichnet, dass** das erste Biegefederelement (40) und das zweite Biegefederelement (50) im Wesentlichen entlang der Richtung der linearen Bewegung angeordnet sind und dass das zweite Biegefederelement (50) mechanisch mit dem Gehäuse (14) in Richtung der linearen Bewegung auf der entgegengesetzten Seite der mechanischen Verbindung des ersten Biegefederelements (40) mit dem Translationselement (16) verbunden ist, so dass das erste Biegefederelement (40) und/oder das zweite Biegefederelement (50) durch die relative Translationsbewegung (21) biegbar sind und eine Biegekraft und/oder ein Biegemoment auf den an der Bewegungsvorrichtung (1) fixierten Daumen (112) ausgeübt wird.

3. Bewegungsvorrichtung (1) gemäß Anspruch 1 - 2, **dadurch gekennzeichnet, dass** das Rotationselement (12) ein Ritzel (13) ist und das Translationselement (16) eine Zahnstange (17) ist, wobei das Ritzel (13) und die Zahnstange (17) dazu angepasst sind, so ineinander zu greifen, dass die Rotation des Ritzels (13) in die lineare Bewegung zwischen der Zahnstange (17) und dem Gehäuse (14) umsetzbar ist.

4. Bewegungsvorrichtung (1) gemäß Anspruch 1 - 3, **dadurch gekennzeichnet, dass** die mechanische Verbindung zwischen dem zweiten Biegefederelement (50) und dem Daumen (112) durch ein zweites Fixierungsmittel (19) realisierbar ist, das an eine Phalanx (PP, DP) des Daumens (112), insbesondere an die distale Phalanx (DP) des Daumens (112), fixierbar ist, wobei zumindest ein translatorischer Freiheitsgrad des zweiten distalen Endes entlang der Richtung der linearen Bewegung durch das zweite Fixierungsmittel (19) fixierbar ist.

5. Bewegungsvorrichtung (1) gemäß Anspruch 1-4, **dadurch gekennzeichnet, dass** das zweite Biegefederelement (50) zwei im Wesentlichen parallel zueinander angeordnete Federn umfasst, insbesondere zwei Blattfedern (24), so dass das Trägheitsmoment des zweiten Biegefederelements (50) um eine Achse senkrecht zur linearen Bewegung und senkrecht zu der Ebene, in der die beiden Federn parallel angeordnet sind, erhöht ist.

6. Bewegungsvorrichtung (1) gemäß Anspruch 1-5, **dadurch gekennzeichnet, dass** die Fixierung des ersten Biegefederelements (40) an den Daumen (112) durch ein erstes Fixierungsmittel (18) realisierbar ist, wobei das erste Biegefederelement (40) durch das erste Fixierungsmittel (18) derart fixierbar ist, dass zumindest ein translatorischer Freiheitsgrad des ersten proximalen Endes (41) entlang der Richtung der linearen Bewegung durch das erste Fixierungsmittel (18) fixiert ist.

7. Bewegungsvorrichtung (1) gemäß Anspruch 1-6, **dadurch gekennzeichnet, dass** das Daumen-Biegemittel (10) ein Führungselement (23) umfasst, das zwischen der Fixierung des zweiten Biegefederelements (50) am Daumen (112) und dem Gehäuse (14) angeordnet ist, wobei das Führungselement (23) angepasst ist, an dem Daumen (112) fixiert zu werden, so dass das Führungselement (23) angepasst ist, das zweite flexible Federelement (50) zu führen, durch im Wesentlichen Fixieren aller translatorischen Freiheitsgrade und aller rotatorischen Freiheitsgrade des zweiten flexiblen Federelements (50) mit Ausnahme eines translatorischen Freiheitsgrades in der Richtung der linearen Bewegung.

8. Bewegungsvorrichtung (1) gemäß Anspruch 7, **dadurch gekennzeichnet, dass** das zweite Biegefederelement (50) einen ersten Abschnitt (53) und einen zweiten Abschnitt (54) umfasst, die entlang der Achse der relativen Translationsbewegung (21) auf entgegengesetzten Seiten des Führungselements (23) angeordnet sind, wobei zwischen dem Führungselement (23) und dem zweiten Biegefederelement (50) ein Reibungswiderstand derart realisiert ist, so dass die Reibungskraft gegen eine auf das zweite Biegefederelement (50) wirkende Kraft wirkt, wenn das zweite Biegefederelement (50) in einer relativen Translationsbewegung (21) bewegt wird, was zu einer Verformung des ersten Abschnitts (53) des zweiten Biegefederelements (50) zwischen dem Gehäuse (14) und dem Führungselement (23) führt, im Wesentlichen bevor eine Verformung des zweiten Abschnitts (54) des zweiten Biegefederelements (50) zwischen dem Führungselement (23) und der Fixierung des zweiten Biegefederelements (50) an den Daumen (112) erfolgt.

9. Bewegungsvorrichtung (1) gemäß Anspruch 1-8, **dadurch gekennzeichnet, dass** das Daumen-Biegemittel (10) mindestens ein Federelement (30) umfasst, das parallel zu dem ersten Biegefederelement (40) und dem zweiten Biegefederelement (50) angeordnet ist, wobei ein distales Ende des Federelements (30) an dem zweiten distalen Ende des zweiten Biegefederelements (50) und ein proximales Ende des Federelements (30) an dem ersten proximalen Ende (41) des ersten Biegefederelements (40) fixiert ist und wobei das Federelement (30) an dem Gehäuse (14) abgestützt ist.

10. Bewegungsvorrichtung (1) gemäß Anspruch 1-9, **dadurch gekennzeichnet, dass** die Bewegungsvorrichtung (1) ein Daumen-Gegenmittel (80) umfasst, das angepasst ist, den Daumen (112) zwischen einer Ruheposition und einer Gegenposition, insbesondere einer Polster-Gegenposition und/oder einer Seiten-Gegenposition, zu bewegen, wobei das Daumen-Gegenmittel (80) durch einen Schwenkpunkt (81) schwenkbar mit dem Daumenbiegemittel (10) verbunden ist und
wobei das Daumen-Gegenmittel (80) ein Vorschubelement (82) umfasst, das mechanisch mit dem Daumen-Biegemittel (10) in einem Abstand zu dem Schwenkpunkt (81) derart verbunden ist, so dass,
wenn eine Vorschubkraft (83) mit mindestens einer Kraftrichtungskomponente senkrecht zur Richtung der linearen Bewegung durch das Vorschubelement (82) auf das Daumen-Biegemittel (10) aufgebracht wird,
das Daumen-Biegemittel (10) sich um den Schwenkpunkt (81) dreht und daher ein an dem Daumen-Biegemittel (10) fixierter Daumen (112) zumindest in einer abduzierten Position bewegbar ist.

11. Bewegungsvorrichtung (1) gemäß Anspruch 10, **dadurch gekennzeichnet, dass** die mechanische Verbindung zwischen dem Vorschubelement (82) und dem Daumen-Biegemittel (10) durch ein Drehgelenk (84) realisiert ist, wobei ein Winkel (85) einer Drehbewegung des Vorschubelements (82) in Bezug auf das Daumenbiegemittel (10) durch ein mechanisches Anschlagmittel (87) begrenzt ist.

12. Bewegungsvorrichtung (1) gemäß Anspruch 10-11, **dadurch gekennzeichnet, dass** das Vorschubelement (82) eine flexible Feder (88), insbesondere eine Biegefeder, ist.

13. Bewegungsvorrichtung (1) gemäß Anspruch 10-12, **dadurch gekennzeichnet, dass** das Vorschubelement (82) durch ein Vorschubelement-Führungsmittel (89) bewegbar geführt wird, wenn es bewegt wird, um eine Vorschubkraft (83) auf das Daumenbiegemittel (10) aufzubringen.

14. Hand-Exoskelett (100) zum Bewegen mindestens eines Fingers einer menschlichen Hand (110), umfassend eine Bewegungsvorrichtung (1) zum Bewegen eines menschlichen Daumens (112) gemäß einem der Ansprüche 1-13.

15. Verfahren zum Greifen eines Gegenstandes, wobei eine Bewegungsvorrichtung (1) gemäß einem der Ansprüche 1-13 am Daumen (112) einer menschlichen Hand (110) oder ein Hand-Exoskelett (100) gemäß Anspruch 14 an einer menschlichen Hand (110) fixiert ist und wobei ein Gegenstand zwischen den Daumen (112) und die Handfläche der Hand (110) platziert ist und wobei durch Betätigung der Getriebeeinheit (11) der Daumen (112) zumindest teilweise in Richtung der Handfläche bewegt wird, insbesondere durch zumindest teilweises Biegen, so dass Kräfte auf den Gegenstand an im Wesentlichen entgegengesetzten Seiten wirken.

## Revendications

1. Dispositif de mouvement (1) pour déplacer un pouce humain (112), notamment pour déplacer le pouce (112) entre une position de repos et une position de préhension, comprenant un moyen de pliage de pouce (10) adapté à déplacer au moins partiellement le pouce (112) entre une position fléchie et une position étendue, dans lequel le moyen de pliage de pouce (10) comprend un module d'engrenage (11) pour transformer une rotation d'un élément de rotation (12), qui est monté à rotation sur un logement (14), en un mouvement essentiellement linéaire entre un élément de translation (16) et le logement (14), et dans lequel le moyen de pliage de pouce (10) comprend un premier élément à ressort de flexion (40) connecté mécaniquement à l'élément de translation (16) et adapté à être fixé à une première extrémité proximale (41) du premier élément à ressort de flexion (40) par rapport à un pouce humain (112) à une position à une distance proximale de l'articulation métacarpophalagienne (MCP), notamment à une position entre l'articulation métacarpophalagienne (MCP) et l'articulation carpométacarpienne (CPC), et dans lequel le moyen de pliage de pouce (10) comprend un second élément à ressort de flexion (50) connecté mécaniquement au logement (14) et adapté à être fixé avec une seconde extrémité distale du second élément à ressort de flexion (50) au pouce humain (112) à une position à une distance distale de l'articulation métacarpophalagienne (MCP), notamment à la phalange distale (DP) et/ou la phalange proximale (PP) du pouce (112) de sorte qu'en opérant le module d'engrenage (11), un mouvement de translation relatif (21) entre l'élément de translation (16) et le logement (14) est réalisé, lequel provoque un pliage d'au moins un des éléments à ressort de flexion (40, 50) et en conséquence au moins un pliage partiel du pouce (112).

2. Dispositif de mouvement (1) selon la revendication 1, **caractérisé en ce que** le premier élément à ressort de flexion (40) et le second élément à ressort de flexion (50) sont essentiellement agencés le long de la direction du mouvement linéaire et que le second élément à ressort de flexion (50) est connecté mécaniquement au logement (14) dans la direction du mouvement linéaire dans le côté opposé de la connexion mécanique du premier élément à ressort de flexion (40) à l'élément de translation (16) de sorte que le premier élément à ressort de flexion (40) et/ou le second élément à ressort de flexion (50) sont pliables par le mouvement de translation relatif (21), et une force de flexion et/ou un moment de flexion est applicable au pouce (112) fixé au dispositif de mouvement (1).

3. Dispositif de mouvement (1) selon les revendications 1 et 2, **caractérisé en ce que** l'élément de rotation (12) est un pignon (13) et l'élément de translation (16) est une crémaillère (17), dans lequel le pignon (13) et la crémaillère (17) sont adaptés à s'engrener de sorte que la rotation du pignon (13) peut être transformée en le mouvement linéaire entre la crémaillère (17) et le logement (14).

4. Dispositif de mouvement (1) selon les revendications 1 à 3, **caractérisé en ce que** la connexion mécanique entre le second élément à ressort de flexion (50) et le pouce (112) peut être réalisée par un second moyen de fixation (19), qui peut être fixé à une phalange (PP, DP) du pouce (112), notamment à la phalange distale (DP) du pouce (112), dans lequel au moins un degré de liberté de translation de la seconde extrémité distale le long de la direction du mouvement linéaire peut être fixé par le second moyen de fixation (19).

5. Dispositif de mouvement (1) selon les revendications 1 à 4, **caractérisé en ce que** le second élément à ressort de flexion (50) comprend deux ressorts, notamment deux ressorts à lames (24), agencés essentiellement parallèlement l'un à l'autre de sorte que le moment d'inertie du second élément à ressort de flexion (50) autour d'un axe perpendiculaire au mouvement linéaire et perpendiculaire au plan dans lequel les deux ressorts sont agencés parallèlement est accru.

6. Dispositif de mouvement (1) selon les revendications 1 à 5, **caractérisé en ce que** la fixation du premier élément à ressort de flexion (40) au pouce (112) peut être réalisée par un premier moyen de fixation (18), dans lequel le premier élément à ressort de flexion (40) peut être fixé par le premier moyen de fixation (18) de sorte qu'au moins un degré de liberté de translation de la première extrémité proximale (41) le long de la direction du mouvement linéaire est fixé par le premier moyen de fixation (18).

7. Dispositif de mouvement (1) selon les revendications 1 à 6, **caractérisé en ce que** le moyen de pliage de pouce (10) comprend un élément de guidage (23) agencé entre la fixation du second élément à ressort de flexion (50) au pouce (112) et le logement (14), dans lequel l'élément de guidage (23) est adapté à être fixé au pouce (112) de sorte que l'élément de guidage (23) est adapté à guider le second élément à ressort de flexion (50) en fixant essentiellement tous les degrés de liberté de translation et tous les degrés de liberté de rotation du second élément à ressort de flexion (50) mis à part un degré de liberté de translation dans la direction du mouvement linéaire.

8. Dispositif de mouvement (1) selon la revendication 7, **caractérisé en ce que** le second élément à ressort de flexion (50) comprend une première section (53) et une seconde section (54) agencées le long de l'axe du mouvement de translation relatif (21) sur des côtés opposés de l'élément de guidage (23), dans lequel entre l'élément de guidage (23) et le second élément à ressort de flexion (50), une résistance de friction est réalisée de sorte que la force de friction agit contre une force agissant sur le second élément à ressort de flexion (50) lorsque le second élément à ressort de flexion (50) est déplacé dans un mouvement de translation relatif (21), qui conduit à une déformation de la première section (53) du second élément à ressort de flexion (50) entre le logement (14) et l'élément de guidage (23) essentiellement avant qu'une déformation de la seconde section (54) du second élément à ressort de flexion (50) entre l'élément de guidage (23) et la fixation du second élément à ressort de flexion (50) au pouce (112) ne se produise.

9. Dispositif de mouvement (1) selon les revendications 1 à 8, **caractérisé en ce que** le moyen de pliage de pouce (10) comprend au moins un élément à ressort (30) agencé parallèlement au premier élément à ressort de flexion (40) et au second élément à ressort de flexion (50), dans lequel une extrémité distale de l'élément à ressort (30) est fixée à la seconde extrémité distale du second élément à ressort de flexion (50) et une extrémité proximale de l'élément à ressort (30) est fixée à la première extrémité proximale (41) du premier élément à ressort de flexion (40), et dans lequel l'élément à ressort (30) est supporté sur le logement (14).

10. Dispositif de mouvement (1) selon les revendications 1 à 9, **caractérisé en ce que** le dispositif de mouvement (1) comprend un moyen d'opposition de pouce (80), adapté à déplacer le pouce (112) entre une position de repos et une position d'opposition, notamment une position d'opposition de pointe et/ou position d'opposition latérale, dans lequel le moyen d'opposition de pouce (80) est connecté à pivotement au moyen de pliage de pouce (10) par un pivot (81) et dans lequel le moyen d'opposition de pouce (80) comprend un élément d'alimentation (82) qui est connecté mécaniquement au moyen de pliage de pouce (10) à une distance au pivot (81) telle que
lorsqu'une force d'alimentation (83) avec au moins une composante de direction de force perpendiculaire à la direction du mouvement linéaire est appliquée au moyen de pliage de pouce (10) par l'élément d'alimentation (82),
le moyen de pliage de pouce (10) tourne autour du pivot (81) et par conséquent un pouce (112) fixé au moyen de pliage de pouce (10) est mobile au moins dans une position en abduction.

11. Dispositif de mouvement (1) selon la revendication 10, **caractérisé en ce que** la connexion mécanique entre l'élément d'alimentation (82) et le moyen de pliage de pouce (10) est réalisée par une articulation cylindrique (84), dans lequel un angle (85) d'un mouvement rotatif de l'élément d'alimentation (82) par rapport au moyen de pliage de pouce (10) est limité par un moyen de butée mécanique (87).

12. Dispositif de mouvement (1) selon les revendications 10 et 11, **caractérisé en ce que** l'élément d'alimentation (82) est un ressort flexible (88), notamment un ressort à cintrer.

13. Dispositif de mouvement (1) selon les revendications 10 à 12, **caractérisé en ce que** l'élément d'alimentation (82) est guidé de manière mobile par un moyen de guidage d'élément d'alimentation (89) lors de son déplacement pour appliquer une force d'alimentation (83) sur le moyen de pliage de pouce (10).

14. Exosquelette pour main (100) pour déplacer au moins un doigt d'une main humaine (110) comprenant un dispositif de mouvement (1) pour déplacer un pouce humain (112) selon une des revendications 1 à 13.

15. Procédé de préhension d'un objet, dans lequel un dispositif de mouvement (1) selon une des revendications 1 à 13 est fixé au pouce (112) d'une main humaine (110) ou un exosquelette pour main (100) selon la revendication 14 est fixé à une main humaine (110), et dans lequel un objet est placé entre le pouce (112) et la paume de la main (110), et dans lequel en opérant le module d'engrenage (11), le pouce (112) est au moins partiellement déplacé dans la direction de la paume, notamment par pliage au moins partiel, de sorte que des forces agissent sur l'objet sur des côtés essentiellement opposés.
